# EUROPEAN PATENT APPLICATION

(11) **EP 1 942 657 A1**
(43) Date of publication of application: **09.07.2008**
(21) Application number: 06782868.1
(22) Date of filing: 22.08.2006
(51) Int. Cl.: H04N 5/00

(54) **DEVICE CONTROL METHOD USING AN OPERATION SCREEN, AND ELECTRONIC DEVICE AND SYSTEM USING THE METHOD**

(30) Priority: 28.09.2005 JP 2005281763
(71) Applicant: MATSUSHITA ELECTRIC INDUSTRIAL CO., LTD., Osaka 571-8501 (JP)
(72) Inventor: KATOU,Norifumi, Chuo-ku, Osaka-shi, Osaka, 540-6207 (JP); NAKAYASU, Tetsuyuki, Chuo-ku, Osaka-shi, Osaka, 540-6207 (JP); NAGAI, Takahiro, Chuo-ku, Osaka-shi, Osaka, 540-6207 (JP); MASHIMO, Noriya, Chuo-ku, Osaka-shi, Osaka, 540-6207 (JP); SUZUKI, Yousuke, Chuo-ku, Osaka-shi, Osaka, 540-6207 (JP); ICHIKAWA, Kei, Chuo-ku, Osaka-shi, Osaka, 540-6207 (JP); IBARAKI, Hisami, Chuo-ku, Osaka-shi, Osaka, 540-6207 (JP); IWASAKI, Shiro, Chuo-ku, Osaka-shi, Osaka, 540-6207 (JP)
(74) Representative: Eisenführ, Speiser & Partner
(86) International application number: PCT/JP2006/316364
(87) International publication number: WO 2007/037077

(57) **Abstract**

An electronic device (e.g., a display device) (101) is connected with an external connection device (e.g., an image recording/playback device) (201), thereby to perform data communications. A controller (103) of the electronic device (101) decides, in case it receives operation information, whether or not an operation screen (GUI) for the electronic device (101) is displayed. When the operation screen is displayed, the controller (103) further decides whether or not a key (a reception key) corresponding to the received operation information is effective for the operation screen. The controller (103) performs, when the reception key is effective for the operation screen, a control responding to the reception key, and, when the reception key is not effective for the operation screen, sends the received operation information to the external connection device (201). With the operation screens of both the electronic device and the external connection device being simultaneously displayed, one remote control makes only one operative, while the operation screens of the two being prevented from simultaneously operating.

## Description

### Technical Field

The present invention relates to a device control technology using an operation screen (GUI), and more particularly to a technology (method and unit) for controlling one of a first device and a second device when an operation screen of the first device and an operation screen of the second device connected to the first device are simultaneously displayed.

### Background Art

Generally, display devices such as television units are capable of not only receiving and reproducing television broadcasts, but also connecting to external connection devices including VTRs (Video Tape Recorders), DVRs (Digital Video Recorders) such as DVD recorders and DVD players so as to allow contents reproduced by those external connection devices to be viewed. Accordingly, in addition to an antenna terminal for receiving television broadcasts, the display devices are often provided with at least one external input terminal. Users can switch these external inputs with a remote control or a button on a display device on a device body, depending on purposes.

External connection devices connected to the display devices are also usually provided with a remote control. Therefore, users need to properly use the respective remote controls of the display device and the external connection device depending on operation targets, which makes operation procedures cumbersome.

One of the solutions to this problem is a display device disclosed in Patent Document 1. The display device receives program related information or data broadcast for the program which is to be reproduced by reproducing devices such as DVRs, relating it to video and audio data, and decodes and reproduces it according to a transmission format. This makes it possible for the display device to receive data broadcast of the reproduced program, as well as to display the data associated with the video and audio and to achieve a remote control operation. As a result, instead of using both the remote control of the display device and the remote control of the reproduction device as done conventionally, it is possible to operate both the devices only by using the remote control of the display device, thereby removing the burden of cumbersome user operation.

Patent Document 1: JP 2004-274718 A

### Disclosure of Invention

Operation screens (GUI: Graphical User Interface) are usually used for operation of display devices and external connection devices. In the case where devices are operated using either a remote control of the display device or a remote control of the external connection device in the state where both the operation screens of the display device and the external connection device are simultaneously displayed on the display device, the following problems arise.

When either one of the remote control of the display device or the remote control of the external connection device is used, only the operation screen of the corresponding device can be operated.

Even if the operation screen of the display device and the operation screen of the external connection device can be operated with any one of the remote controls of the display device and the external connection device, both the operation screens operate with the one remote control, i.e., functions provided by the operation screen of the display device are effective concurrently with functions provided by the operation screen of the external unit, which makes it impossible to operate only one of the operation screens.

In order to solve the above problems, an object of the present invention is to provide a device control method which allows desired operations while preventing both an operation screen of a display device and an operation screen of an external device from functioning at the same time with one remote control in a situation that both the operation screens are simultaneously displayed on the display device, and to also provide an electronic device and system using the device control method.

### Means for Solving Problems

In the first aspect of the present invention, there is provided a method for controlling first and second devices with a first operation screen for operating the first device and a second operation screen for operating the second device being displayed simultaneously. In the control method, operation information for operating one of the first device and the second device is received, and it is determined, whether or not the first operation screen is displayed. When the first operation screen is displayed, it is further determined whether or not a key (received key) corresponding to the received operation information is valid for the first operation screen. When the received key is valid for the first operation screen, the first device is controlled according to the received key. When the key is not valid for the operation screen, the operation information is transmitted to the second device.

The operation information may be transmitted from a remote control for the first device.

The key corresponding to the operation information may include a key for moving a cursor in at least one of four directions of left, right, up, and down, and/or a decision key used for one of deciding a selection and executing a selected function.

The first device may be a display device which can display videos, and the second device may be a device which can record and/or reproduce information for a predetermined recording medium.

In the second aspect of the present invention, there is provided an electronic device which can transmit and receive data to/from an external connection device. The electronic device includes an operation receiver that receives operation information for operating one of the electronic device and the external connection device, a controller that controls operation of the electronic device, and a command transmitting section that can transmit the received operation information as command data to the external connection device. The controller determines whether or not an operation screen for operating the electronic device is displayed when the operation receiver receives the operation information, and further determines whether or not a key corresponding to the received operation information is valid for the operation screen when the operation screen is displayed. When the key is valid for the operation screen, it controls the electronic device according to the key corresponding to the received operation information. When the key is not valid for the operation screen, it transmits the operation information to the external connection device via the command transmitting section.

In the third aspect of the present invention, there is provided an external connection device which is connected to an electronic device and transmits/receives data to/from the electronic device. The external connection device includes a command receiver that receives, from the electronic device, operation information which is transmitted to the electronic device, a controller that controls operation of the external connection device, a data processor that processes an operation screen of the external connection device according to the operation information received via the command receiver, and a data output section that transmits the operation screen processed by the data processor to the electronic device.

A system may be composed of the above-mentioned electronic device and external connection device.

### Effect of the Invention

According to the present invention, even when the operation screen of the display device and the operation screen of the external connection device are displayed simultaneously, it is determined whether a pressed button is valid or invalid for the operation screen of the display device. If it is valid, the operation screen of the display device is enabled to be functioned, whereas if it is invalid, the operation screen of the external connection device is enabled to be functioned (operation is switched to the external unit). This prevents both operation screens from being operated in the case where both the operation screens are simultaneously displayed, and allows only either one of the operation screens to be operated.

### Brief Description of Drawings

Fig. 1 is a block diagram of an image display system including a display device and an external connection device according to an embodiment of the present invention.
Fig. 2 is a view showing an example in which both menu screens of the display device and the external connection device are simultaneously displayed.
Fig. 3 is a flowchart of the display device according to the embodiment of the present invention.
Fig. 4 is a flowchart of the external connection device according to the embodiment of the present invention.
Fig. 5 is a view showing an example in which both menu screens of the display device and the external connection device are simultaneously displayed.

### Reference Signs

11, 15: Display device menu screen
13, 17: External connection device menu screen
101: Display device (electronic device)
102, 202: User operation receiver
103, 203: Controller
104, 204: Command input/output interface
105: Data input interface
106, 206: Data processor
107: Antenna
108: Tuner
109: External input section
110: Switch
111: Display section
201: External connection device
205: Data output interface
300: Display device remote control
301: Telecommunication cable

### Best Mode for Carrying Out the Invention

The embodiments of the present invention will be described hereinbelow with reference to the accompanying drawings.

### 1. System Configuration

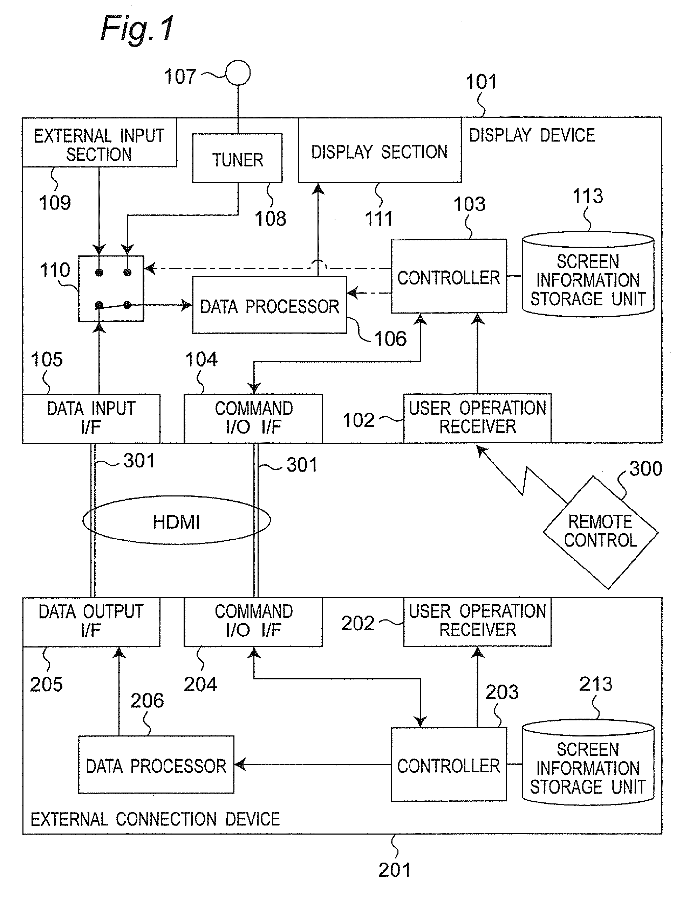

Fig. 1 is a view showing configuration of a video display system composed of a display device and an external connection device according to an embodiment of the present invention. The display device 101 and the external connection device 201 are each provided with an operation screen (hereinafter referred to as a "menu screen") on which focusing and cursor movement are possible. In this regard, "focusing" is an operation to designate one out of various choice items displayed on the menu screen, and "cursor movement" refers to an operation to shift the designation of the choice item.

The display device 101 is, for example, an electronic device such as a television set which can receive from the outside and reproduce broadcast or audio and video signals. The external connection device 201 is, for example, a device which is connectable to the display device 101, such as DVR (Digital Video Recorder) including DVD recorder and VTR (Video Tape Recorder), and DVD player.

The display device 101 can be operated from a dedicated remote control 300 with a plurality of operation keys (buttons). The operation keys are also provided on the body of the display device 102. Upon user's operation with a key on the remote control 300 or on the body of the display device, an operation code corresponding to the key is outputted. The display device 101 includes a user operation receiver 102 for receiving an operation code from the keys provided in the remote control 300 or the body of the display device. The user operation receiver 102 receives an operation code from the dedicated remote control 300 for the display device 101.

The display device 101 further includes a controller 103 for controlling the operation of the display device 101, a command input/output interface (I/F) 104 for communicating command data, a data input interface 105 for receiving video/audio/menu data and the like, a data processor 106 for processing the inputted video/audio/menu data and the like, an antenna 107 for receiving broadcasting signals, a tuner 108 for processing the broadcasting signals received from the antenna 107, an external input section 109 for inputting video/audio/menu data and the like from the outside, a switch 110 for selecting one from the respective outputs of the external input section 109, the tuner 108 and the data input interface 105, and a screen information storage unit 113 for storing information relating to a menu screen which is being displayed on the display section 111.

The external connection device 201 can also be operated from a dedicated remote control (not shown) for the external connection device 201 having a plurality of operation keys. A plurality of operation keys are also provided in the main body of the external connection device 201. The external connection device 201 has a user operation receiver 202 which receives an operation code corresponding to the operated key, from an operation key on the remote control of the external connection device 201 or on the main body of the external connection device. The user operation receiver 202 accepts an operation code from the dedicated remote control for the external connection device 201. The external connection device 201 includes a controller 203 for controlling the operation of the external connection device 201, a command input/output interface 204 for communicating command data, a data output interface 205 for transmitting video/audio/menu data and the like, a data processor 206 for processing video/audio/menu data and the like to be outputted, and a screen information storage unit 213 for storing information relating to a menu screen currently displayed on the display device 101.

The display device 101 and the external connection device 201 are connected to each other through a telecommunication cable 301 for exchanging video data, audio data, menu screen data, and command data. For example, HDMI (High-Definition Multimedia Interface) can be used for connecting the display device 101 with the external connection device 201. The HDMI has three data channels and one clock channel (hereinafter referred to as a "TMDS channel"), and a display data channel (hereinafter referred to as a "DDC") that exchanges data on device configuration and device status. The HDMI further has an optional CEC channel which allows control signals to be communicated bi-directionally between various AV devices. In the present embodiment, video data/audio data/menu screen data are transmitted and received via the TMDS channel, while command data via the CEC circuit. The command data may be transmitted and received via the DDC. The same functions can be achieved with use of IEE 1394 in place of HDMI.

### 2. Operation

Description is now given of the operation of the display device 101. It is assumed that both menu of the display device 101 and menu of the external connection device can be displayed simultaneously on the display device 101. When a menu screen (hereinafter referred to as a "display device menu") for making predetermined operation to the display device 101 and a menu screen (hereinafter referred to as an "external connection device menu") for making predetermined operation to the external connection device 201 are respectively displayed on a display section 111 of the display device 101, operation keys on the remote control 300 of the display device 201 or on the display device body can transmit instructions (operation codes) with respect to the key for cursor movement on the menu screen. The user operation receiver 102 receives an instruction (operation code) of the key, and communicates the received instruction of the key to the controller 103.

The data processor 106 of the display device 101 generates a display device menu, and displays it on the display section 111.

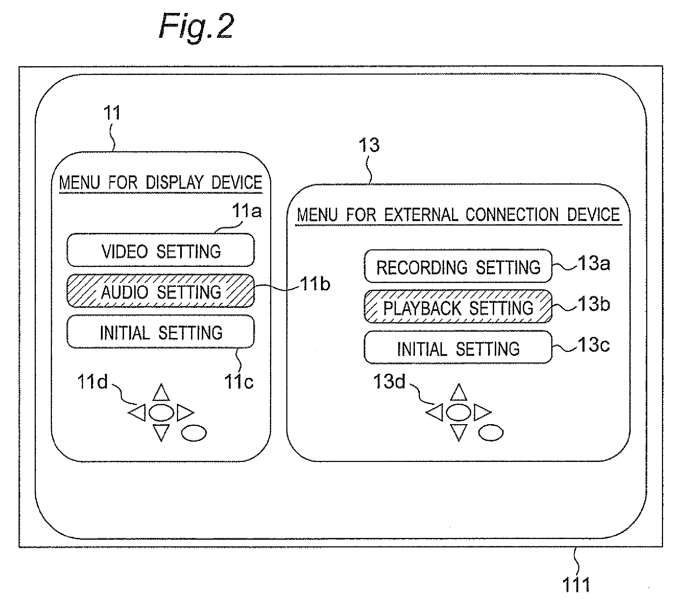

Fig. 2 shows an example in which both menu screens of the display device 101 and the external connection device 201 are displayed simultaneously on the display section 111. Three choice items 11a to 11c are displayed on a display device menu 11. Further, a guidance 11d is displayed to show the keys for use in selecting, deciding or executing the choice items 11a to 11c (a four-direction key, a decision key, and so on.). Similarly, three choice items 13a to 13c are displayed on an external connection device menu 13. Also on the menu screen 13, a guidance 13d is displayed to show the keys for use in selecting, deciding or executing the selection items 13a to 13c (a four-direction key, a decision key, and so on.). Fig. 2 shows that the item "AUDIO SETTING" 11b is focused in the display device menu 11 and the item "PLAYBACK SETTING" 13b is focused in the external connection device menu 13.

The keys (button) which are used for selecting, deciding and executing the choice items are commonly used or shared in the respective menu screens of the display device 101 and the external connection device 201. Therefore these keys are generically called "common keys". The common keys may also include a button (hereinafter referred to as a "return key") for one of returning the screen to the previous state and eliminating the screen currently displayed. In the following description, for the sake of simplification, explanation is made to the operation in the case where the display device 101 or the external connection device 201 receives an operation code of a common key from the remote control or the unit main body. Upon reception of operation code of a key other than the common keys, process for the menu screen corresponding to the key is made in the same way as done conventionally.

Referring to Fig. 1, the switch 110 is selecting the output of the data input interface 105. Therefore, the data processor 106 applies predetermined data processing to a signal inputted from the external connection device 201 via the data input interface 105, and displays the result on the display section 111.

The controller 103 manages the state of the display device menu and the external connection device menu. The controller 103 also manages contents to be displayed in the display device menu which is currently on display. Thus, information relating to the state of the display device menu and the external connection device menu currently on display and information relating to the content in the display device menu currently on display are stored in the screen information storage unit 113. The controller 103 can recognize the display state and content of the menu screen with reference to the screen information storage unit 113, and determine whether the received key is valid (necessary) for the screen currently on display. It is noted that the state of the menu refers to state in which the menu screen is displayed or not displayed. The content in the menu includes the content of the choice items currently displayed on the menu screen, the selecting state of each choice item, and the like.

The controller 103 determines the information (type) of the key corresponding to the operation code received via the user operation receiver 102. When the received key is the key valid for the content of the display device menu 11 currently on display, i.e., when the received key matches a key which is managed by the controller 103 and needed for the display device menu 11, the controller 103 uses the received key for operation of the display device menu 11. In this case, the controller 103 does not transmit the command data corresponding to the received key to the command input/output interface 104.

When the common key received via the user operation receiver 102 is invalid for the display device menu 11 currently on display, i.e., when the received key does not match a key which is managed by the controller 103 and needed for the display device menu 11, the controller 103 keeps the state of the display device menu 1 and transfers the command data corresponding to the received key to the command input/output interface 104. The command data is then transmitted to the external connection device 201 via the command input/output interface 104.

The external connection device 201 receives the command data from the display device 101 via the command input/output interface 104. When the external connection device menu is displayed in the display section 111 of the display device 101, the controller 203 determines the information of a key received from the display device 101 based on the received command data. When the information of the received key is valid for the external connection device menu currently displayed on the display section 111, the controller 203 processes the external connection device menu according to the information of the key. In short, an instruction by the key is transmitted to the external connection device 201 with this timing. It is noted that the external connection device menu displayed on the display section 111 is generated by the data processor 206 in the external connection device 201. The generated data is transmitted to the display device 101 via the data output interface 205.

When the information of the received key is invalid for both the display device menu and the external connection device menu currently on display, the controller 103 of the display device 101 does not perform any processing pertaining to the key.

### (Processing in a Display Device)

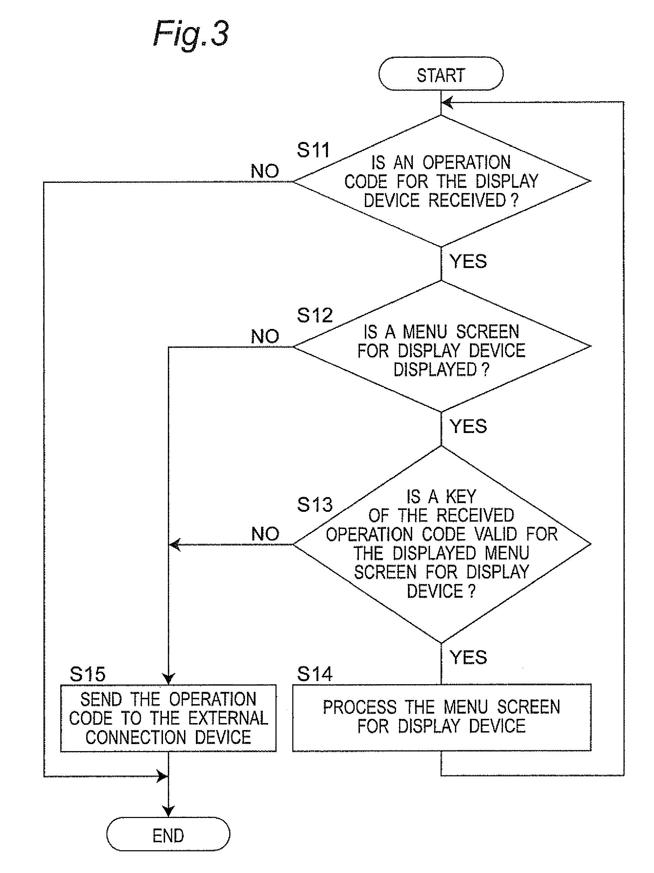

Fig. 3 is a flowchart showing processing of the display device 101 connected to the external connection device 201 in the present embodiment. On the display device 101, each menu screen of the display device 101 and the external connection device 201 is displayed, and both menu screens accept operations (focusing and cursor movement) by common keys.

The user operation receiver 102 of the display device 101 receives an operation code corresponding to the key operated by the user from the remote control 300 or the display device body (S11). The controller 103 with reference to the screen information storage unit 213 checks whether or not the display device menu is displayed on the display section 111 (S12). When the display device menu is displayed, the controller 103 with reference to the screen information storage unit 213 determines whether or not the received operation code key is a key valid for the display device menu currently on display (S13). That is, it is determined whether or not the display device menu currently on display is a screen operable by the common key.

When it is determined to be valid in step S13, the controller 103 processes the display device menu according to the information of the received key (S14). More specifically, the display device 101 undergoes processing based on the combination of the display device menu and the received key. For example, in the case where respective menu screens 11 and 13 of the display device 101 and the external connection device 201 as shown in Fig. 2 are displayed simultaneously , focusing (on AUDIO SETTING item 11 b in the example) and cursor movement are enabled in the display device menu 11. Therefore it is determined that the received operation code key is a key valid for the menu screen currently on display. In this case, the display device menu can be operated by the key but the external connection device menu can not be operated by the key.

In contrast with the above, when the received key is not valid for the menu screen currently on display in step S13 (NO in S13), the controller 103 transmits the information on the received key to the external connection device 201 via the command input/output interface 104 (S15). In this case, the display device menu displayed on the display section 111 is unchanged.

### (Processing in an External Connection Device)

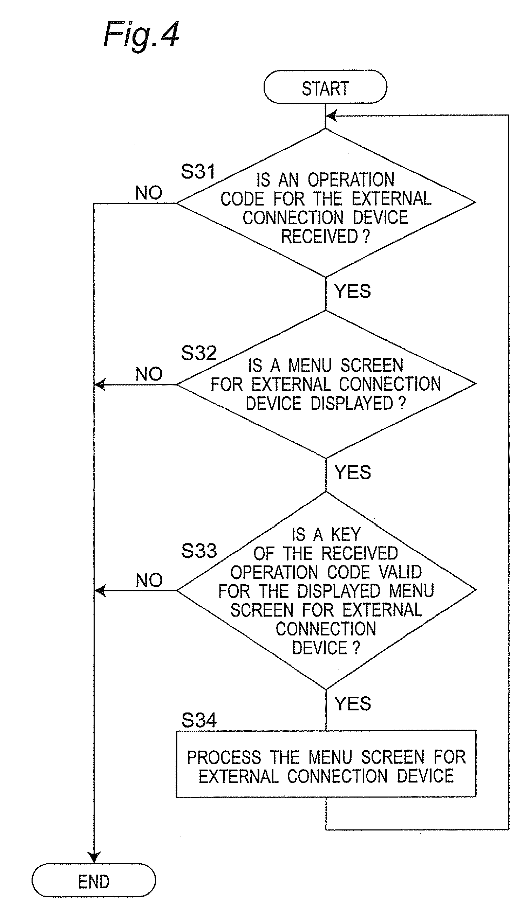

Fig. 4 shows a flowchart of the processing of the external connection device 201 connected to the display device 101 according to the embodiment.

The external connection device 201 receives an operation code from the display device 101 via the command input/output interface 204 (S31). The controller 203 of the external connection device 201 with reference to the screen information storage unit 213 checks whether or not the external connection device menu is displayed on the display section 111 of the display device 101 (S32).

When the external connection device menu is displayed, the controller 203 determines whether or not a key corresponding to the received operation code is valid for the external connection device menu currently on display (S33). If the key is valid, the controller 203 processes the external connection device menu (S34). More specifically, the data processor 206 processes screen data according to the key corresponding to the received operation code, and transmits the processed screen data via the data output interface 205 to the display device 101 in which the screen data is displayed. Thus, when the received key is valid for the external unit menu, in the external connection device 201 the processing corresponding to the combination of the external device menu and the received key is performed.

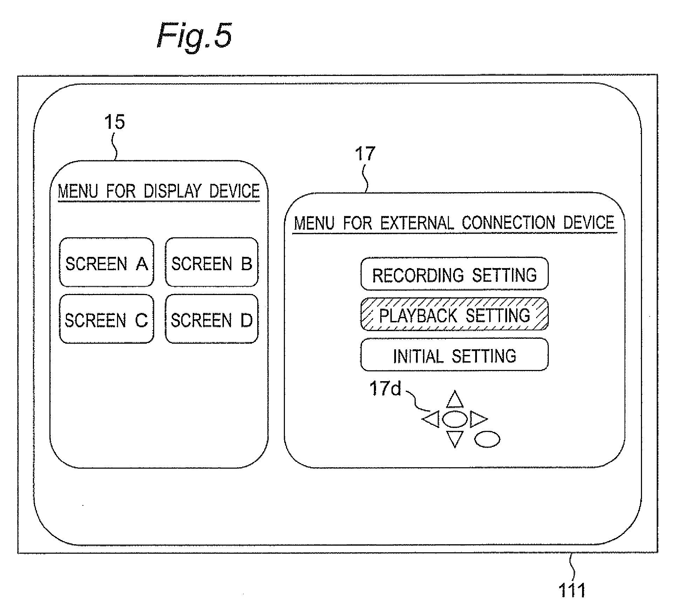

For example, Fig. 5 shows an example in which the display device menu 15 and the external connection device menu 17 are simultaneously displayed on the display section 111, and no item operable by the common key is displayed in the display device menu 15. In this case, operation by the common key is valid for the external connection device menu 17, and therefore the display device menu 15 can not be operable by the common key.

### 3. Conclusion

According to the configuration of the present embodiment as mentioned above, when the display device menu and the external connection device menu are simultaneously displayed, in the display device 101 it is determined whether the received operation code is valid/invalid for the display device menu. If it is valid, the display device menu is operated according to the received operation code. If it is invalid, the external connection device menu is operated according to the received operation code. This makes it possible to operate only one of the menu screens without operating both the menu screens at the same time, even when the display device menu and the external connection device menu are displayed simultaneously.

It is to be noted that in the embodiment disclosed, description has been made by using as an example a display device and an external connection device which outputs video signals to the display device. However, according to the concept of the present invention, when operation screens (GUI) for two devices which can communicate with each other are simultaneously displayed, only one of the displayed operation screens can be made operable by using a remote control for either one of the devices. Therefore, the concept of the present invention is not limited to display devices but also applicable to electronic devices having other functions. More specifically, the concept of the present invention is applicable to one device which is connected to the other device and can communicate with the other device, when operation screens for both devices can be simultaneously displayed on one screen.

### Industrial Applicability

The present invention is useful in screen control technology for a display device which is associated with an external connection device, and is widely applicable to such a display device, external a connection device connected to the display device, and a system composed of the display device and external connection device connected each other.

Although the present invention has been explained in conjunction with the specific embodiments, numerous rearrangements, modifications, and substitutions of the present invention are clear for those skilled in the art. The present invention, therefore, is not limited to the specific disclosures, the scope of the invention being indicated only by the appended claims. It should be noted that this application relates to the Japanese patent application No.2005-281763 (filed on September 28, 2005), of which contents are incorporated herein by reference.

## Claims

1. A device control method for controlling first and second devices with a first operation screen for operating the first device and a second operation screen for operating the second device being displayed simultaneously, the method comprising:
receiving operation information for operating one of the first device and the second device;
determining whether or not the first operation screen is displayed;
determining whether or not a key corresponding to the received operation information is valid for the first operation screen, when the first operation screen is displayed; and
controlling the first device according to the key corresponding to the received operation information, when the key is valid for the first operation screen, and
transmitting the operation information to the second device, when the key is not valid for the operation screen.

2. The device control method according to claim 1, wherein the operation information is transmitted from a remote control for the first device.

3. The device control method according to claim 1, wherein the key corresponding to the operation information includes a key for moving a cursor in at least one of four directions of left, right, up, and down, and/or a decision key used for one of deciding a selection and executing a selected function.

4. The device control method according to Claim 1, wherein the first device is a display device capable of displaying videos.

5. The device control method according to claim 1, wherein the second device is a device capable of recording information to and/or reproducing information from a predetermined recording medium.

6. An electronic device which can transmit and receive data to/from an external connection device, comprising:
an operation receiver that receives operation information for operating one of the electronic device and the external connection device;
a controller that controls operation of the electronic device; and
a command transmitting section that can transmit the received operation information as command data to the external connection device, wherein
the controller:
determines whether or not an operation screen for operating the electronic device is displayed when the operation receiver receives the operation information, and further determines whether or not a key corresponding to the received operation information is valid for the operation screen when the operation screen is displayed; and
controls the electronic device according to the key corresponding to the received operation information, when the key is valid for the operation screen; and
transmits the operation information to the external connection device via the command transmitting section, when the key is not valid for the operation screen.

7. The electronic device according to claim 6, wherein the operation receiver receives the operation information transmitted from a remote control for the electronic device.

8. The electronic device according to claim 6, wherein the key corresponding to the operation information includes a key for moving a cursor in at least one of four directions of left, right, up, and down, and/or a decision key used for one of deciding a selection and executing a selected function.

9. The electronic device according to claim 6, which is a display device which can display videos.

10. An external connection device which is connected to an electronic device and transmits/receives data to/from the electronic device, comprising:
a command receiver that receives, from the electronic device, operation information which is transmitted to the electronic device;
a controller that controls operation of the external connection device;
a data processor that processes an operation screen of the external connection device according to the operation information received via the command receiver; and
a data output section that transmits the operation screen processed by the data processor to the electronic device.

11. The external connection device according to claim 10, which is a device capable of recording information to and/or reproducing information from a predetermined recording medium.

12. A system comprising the electronic device according to claim 6 and the external connection device according to claim 10.

## Amended claims

### Amended claims under Art. 19.1 PCT

**1.** Amended) A device control method for controlling a first device so as to enable control of the first device and a second device with a first operation screen for operating the first device and a second operation screen for operating the second device being displayed simultaneously, the method comprising:
receiving operation information for one of operating the first device and the second device;
determining whether or not the first operation screen is displayed;
determining whether or not a key corresponding to the received operation information is valid for the first operation screen, when the first operation screen is displayed; and
controlling the first device according to the key corresponding to the received operation information, when the key is valid for the first operation screen, and
transmitting the operation information to the second device, when the key is not valid for the operation screen.
